# EUROPEAN PATENT APPLICATION

(11) **EP 1 679 591 A1**
(43) Date of publication of application: **12.07.2006**
(21) Application number: 05000167.6
(22) Date of filing: 05.01.2005
(51) Int. Cl.: G06F 9/445, G06F 21/00

(54) **Web camera identification system and method**

(71) Applicant: Grand Advance Corp., Hsintien City, Taipei (TW)
(72) Inventor: Wu, Chao-Hung, Hsintien City Taipei (TW)
(74) Representative: Viering, Jentschura & Partner

(57) **Abstract**

A web camera identification system and method are described. The system uses a web camera, a client computer, and a server website. The web camera stores an authentication password and a video communication application. The server website has an authentication module for identifying the web camera and a function module. After the client computer installs the video communication application provided by the web camera, the web camera can connect to the server website via the client computer. The server website authenticates availability of the web camera by checking the authentication password. The web camera may obtain the services provided by the function module after passing the authentication.

## Description

### BACKGROUND OF THE INVENTION

### 1. Field of the Invention

The present invention relates to a web camera identification system and method, and especially relates to a web camera storing an application.

### 2. Description of Related Art

People desire to communicate visually through computers and the Internet. On the current market, there are two prevalent ways to install a video communication application in a computer. One is installing by a setup disc and the other is installing by a remote setup application through the Internet. However, most people are not familiar with an installation process because they never learn computer skills or installation methods. Even for professional computer engineers, many complicated steps are necessary to finish the installation of avideo communication application.

### SUMMARY OF THE INVENTION

The main aspect of the present invention is to provide a web camera identification system and method. The web camera of the present invention stores an application to simplify the installation process.

To achieve the above aspect, the present invention provides a web camera identification system including a server website, a client computer, and a web camera. The server website has an authentication module and a function module. The web camera connects to the client computer and has a non-volatile memory for storing an authentication password and a connection activation password. The client computer connects to the server website by using the connection activation password and then downloads a communication application for installation. The authentication module of the server website checks the authentication password of the web camera to determine whether the web camera is allowed to obtain services provided by the function module.

To achieve the above aspect, the present invention provides a web camera identification system including a server website, a client computer, and a web camera. The server website has an authentication module and a function module. The web camera connects to the client computer and has a non-volatile memory for storing an authentication password and a video communication application. The client computer connects to the server website to execute video communication data transmission after the installation of the video communication application from the web camera. The authentication module of the server website checks the authentication password of the web camera to determine whether the web camera is allowed to obtain services provided by the function module.

To achieve the above aspect, the present invention provides a web camera identification method, which includes the following steps. An authentication password is stored in a web camera. The web camera connects to a server website via a client computer. The server website authenticates availability of the web camera by checking the authentication password. The web camera obtains services provided by the server website after passing the authentication.

It is noted that the drawings are expected for the purpose of reference and illustration but not expected for the purpose of restricting the scope of the present invention.

### BRIEF DESCRIPTION OF THE DRAWINGS

The foregoing aspects and many of the attendant advantages of this invention will be more readily appreciated as the same becomes better understood by reference to the following detailed description, when taken in conjunction with the accompanying drawings, wherein:
FIG. 1 illustrates a preferred embodiment of the present invention;
FIG. 2 illustrates a preferred embodiment of a web camera of the present invention;
FIG. 3 illustrates a preferred embodiment of another web camera of the present invention;
FIG. 4 illustrates a preferred embodiment of a server website of the present invention; and
FIG. 5 illustrates a flow chart of a preferred embodiment of the present invention.

### DETAILED DESCRIPTION OF THE PREFERRED EMBODIMENTS

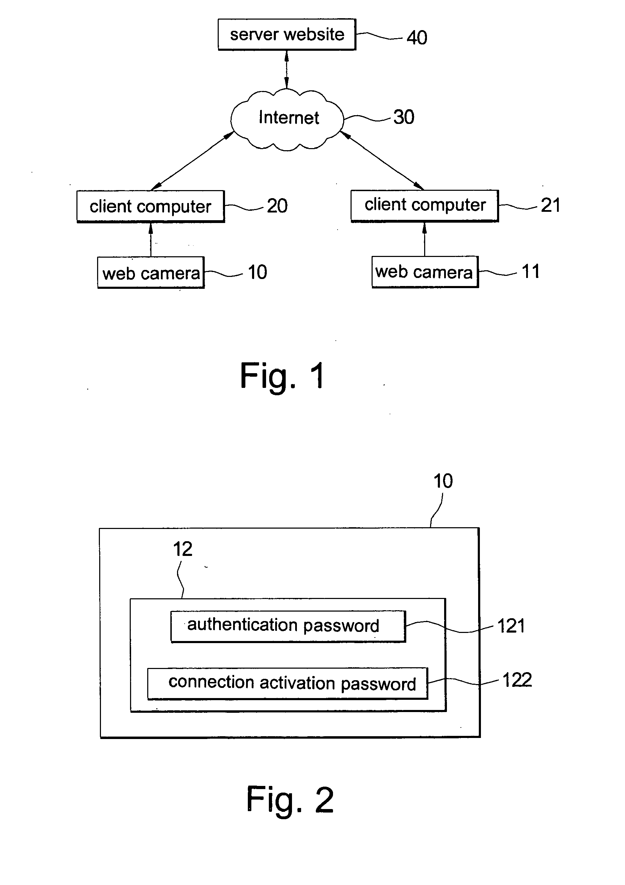

FIG. 1 shows a preferred embodiment of the present invention. It is a web camera identification system, adapted for a master-slave network, which includes a web camera 10, a client computer 20, and a server website 40. The web camera 10 stores an application and connects to the client computer 20 through a USB interface. The client computer 20 connects to the server website 40 through the Internet 30. The server website 40 identifies the web camera 10 to determine availability of the web camera 10 and to determine whether the web camera 10 is allowed to obtain services, such as video communication transmissions or video related applications, provided by the server website 40.

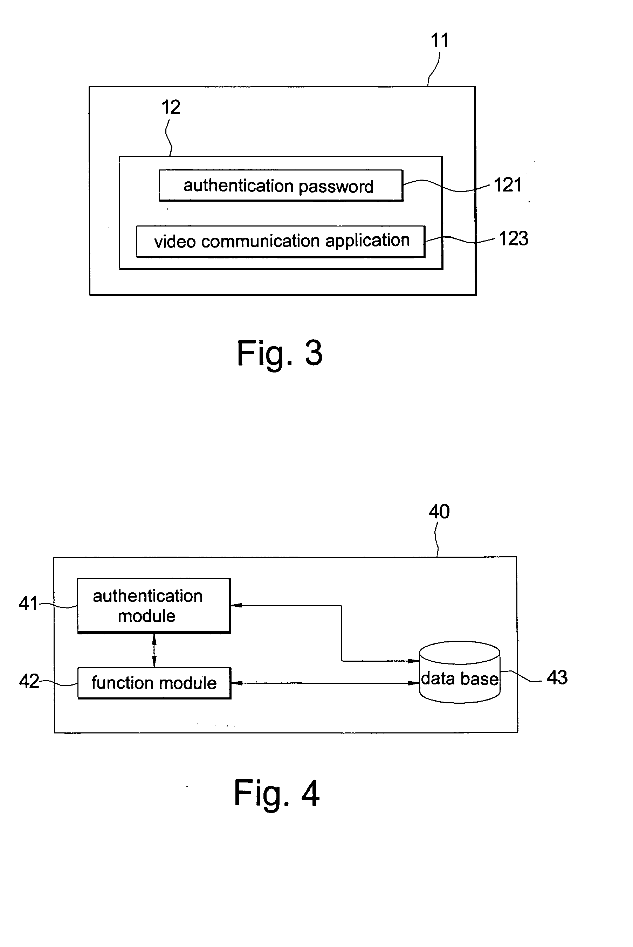

There are two implementations for the web camera of the present invention as shown in FIG. 2 and FIG. 3. Referring to FIG. 2 first, the web camera 10 includes a non-volatile memory 12 configured to store the information of an authentication password 121 and a connection activation password 122. The authentication password 121 is used for the server website 40 to determine availability of the web camera 10. The connection activation password 122 is used for the client computer 20 to connect to the server website 40 automatically and to download a video communication application for installation.

Referring to FIG. 3, the web camera 11 also includes a non-volatile memory 12 configured to store the information of the authentication password 121 and a video communication application 123. The authentication password 121 is used for the server website 40 to determine availability of the web camera 11. The video communication application 123 is installed into a client computer 21. Therefore, the client computer 21 does not have to connect to the server website 40 to download a video communication application as shown in FIG. 2.

Accordingly, the installation of a video communication application of the present invention may be either like the web camera 10 of FIG. 2 connecting to the server website 40 to download a video communication or like the web camera 11 of FIG. 3, installing the video communication application 123 by itself.

FIG. 4 shows a preferred embodiment of the server website of the present invention. The server website 40 includes an authentication module 41, a function module 42, and a database 43. The authentication module 41 checks the authentication password 121 of the web camera 10 or 11. Once the web camera 10 or 11 passes the check, the web camera 10 or 11 is allowed to obtain services provided by the server website 40. The function module 42 of the server website 40 responds to the operations of the installed video communication application. The function module 42 also can provide the download service of the video communication application to the web camera 10 of FIG. 2. The database 43 is configured to store data associated with the operation history of the web camera 10 or 11.

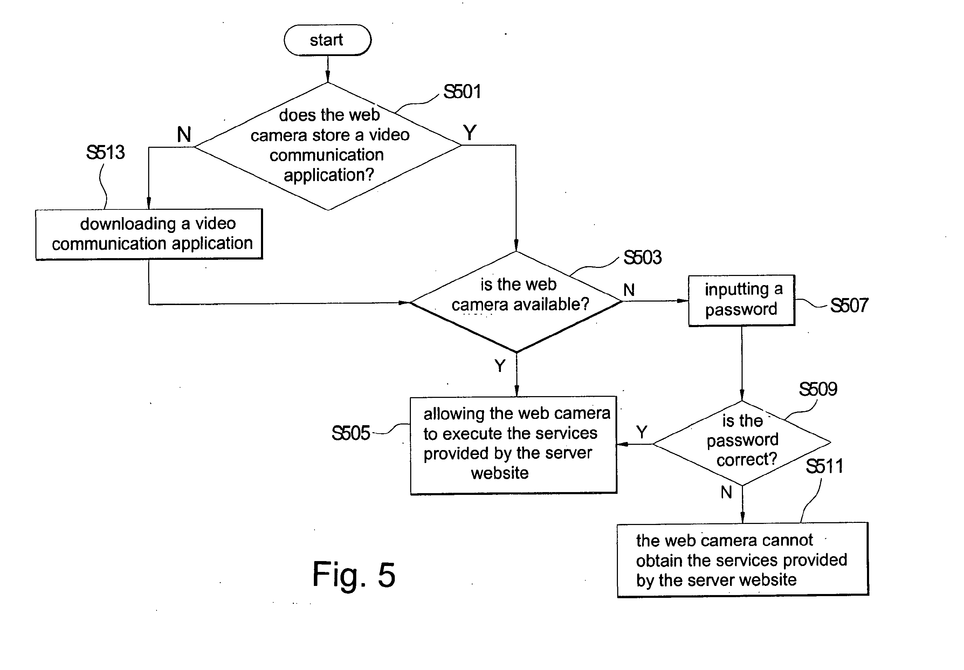

FIG. 5 shows a flow chart of a preferred embodiment of the present invention. First, the web camera identification method determines whether the web camera connecting to the client computer has a video communication application stored therein (S501). If not, the web camera has the structure shown in FIG. 2 or the web camera is just a web camera of the prior art without an authentication password, which needs the client computer to connect to a server website by using a connection activation password or by a manual input to download a video communication application (S513). If yes, the web camera has the structure shown in FIG. 3. The client computer can obtain a video communication application from the web camera. When the client computer connects to the server website through the installed video communication application, the server website will check availability of the web camera; i.e., the authentication module of the server website checks the authentication password of the web camera (S503). If the web camera passes the check, the web camera is allowed to execute the services provided by the server website (S505). If the web camera does not pass the check, the user may input a password manually so a web camera without an authentication password may execute the services provided by the server website as well (S507). Then the password input by the user is checked (S509). If the check is passed, the method goes to S505. If the check is not passed, the web camera cannot obtain the services provided by the server website (S511).

Referring back to FIG. 1, when the web cameras 10 and 11 respectively connect to the client computers 20 and 21, both of the web cameras 10 and 11 pass the check, and the client computers 20 and 21 have a video communication application installed therein, the client computers 20 and 21 may transmit communication data to each other by using the web cameras 10 and 11 through the Internet 30.

Based on the above description, the web camera identification system and method of the present invention have the following advantages:
1. The web camera storing an application can reduce the process of application installation and quicken the installation speed. This makes operations easier.
2. The web camera having an authentication password can connect to any computer and can make the computer to upgrade as a video communication computer by accessing the information stored in the web camera instantly through a master-slave network.

The above description of the preferred embodiments is expected to clearly expound the characteristics of the present invention but not expected to restrict the scope of the present invention. Those skilled in the art will readily observe that numerous modifications and alterations may be made while retaining the teaching of the invention. Accordingly, the above disclosure should be construed as limited only by the bounds of the claims.

## Claims

1. A web camera identification system, comprising:
a server website having an authentication module and a function module;
a client computer; and
a web camera connecting to the client computer and having a non-volatile memory for storing an authentication password and a connection activation password;
wherein the client computer connects to the server website by using the connection activation password and downloads a communication application for installation, and the authentication module of the server website checks the authentication password of the web camera determines whether the web camera is allowed to obtain services provided by the function module.

2. The web camera identification system of claim 1, wherein the web camera connects to the client computer through a USB interface.

3. The web camera identification system of claim 1, wherein the server website further comprises a database for storing data associated with an operation history of the web camera.

4. A web camera identification system, comprising:
a server website having an authentication module and a function module;
a client computer; and
a web camera, connecting to the client computer and having a non-volatile memory for storing an authentication password and a video communication application;
wherein the client computer connects to the server website to execute video communication data transmission after installation of the video communication application, and the authentication module of the server website checks the authentication password of the web camera determines whether the web camera is allowed to obtain services provided by the function module.

5. The web camera identification system of claim 4, wherein the web camera connects to the client computer through a USB interface.

6. The web camera identification system of claim 4, wherein the server website further comprises a database for storing data associated with an operation history of the web camera.

7. A web camera adapted for a master-slave network, the web camera connecting to a client computer and further connecting to a server website via the client computer, the web camera having a non-volatile memory for storing an authentication password for the server website to identify and a connection activation password for the client computer to connect to the server website to download a communication application.

8. A web camera adapted for a master-slave network, the web camera connecting to a client computer and further connecting to a server website via the client computer, the web camera having a non-volatile memory for storing an authentication password for the server website to identify and a video communication application, installed into the client computer, for connecting to the server website to execute video communication data transmission.

9. A web camera identification method, comprising the steps of:
storing an authentication password in a web camera;
connecting the web camera to a server website via a client computer;
authenticating availability of the web camera by checking the authentication password via the server website; and
obtaining services provided by the server website after passing the authentication to the web service.

10. The web camera identification method of claim 9, wherein the web camera has a non-volatile memory for storing the authentication password.

11. The web camera identification method of claim 9, wherein the web camera provides a connection activation password for the client computer to connect to the server website and to download a video communication application.

12. The web camera identification method of claim 9, further comprising the step of:
providing a video communication application by the web camera, installed into the client computer, for executing communication data transmission with the server website.

13. The web camera identification method of claim 9, wherein the server website has a function module for providing services to the web camera.

14. The web camera identification method of claim 9, further comprising the step of:
allowing input of a password for the server website to authenticate availability of the web camera again if the web camera does not pass the authentication.
